Europäisches Patentamt

European Patent Office

Office européen des brevets

(11) Veröffentlichungsnummer: **0 299 472**

**A2**

(12) **EUROPÄISCHE PATENTANMELDUNG**

(21) Anmeldenummer: **88111315.3**

(22) Anmeldetag: **14.07.88**

(51) Int. Cl.4 **G06K 7/10**

(30) Priorität: **15.07.87 DE 3723348**

(43) Veröffentlichungstag der Anmeldung:
**18.01.89 Patentblatt 89/03**

(84) Benannte Vertragsstaaten:
**AT BE CH ES FR GB IT LI NL SE**

(71) Anmelder: **Krieg, Gunther, Prof.Dr.Ing.**
**Im Rennich 12**
**D-7500 Karlsruhe 41(DE)**

(72) Erfinder: **Krieg, Gunther, Prof.Dr.**
**Im Rennich 12**
**D-7500 Karlsruhe 41(DE)**
Erfinder: **Helget, Werner**
**Rheinstrasse 12**
**D-7500 Karlsruhe 41(DE)**

(74) Vertreter: **Dr.-Ing. Hans Lichti Dipl.-Ing. Heiner**
**Lichti Dipl.-Phys. Dr. Jost Lempert**
**Postfach 41 07 60 Durlacher Strasse 31**
**D-7500 Karlsruhe 41(DE)**

(54) **Verfahren und System zum Lesen von Strichcodes.**

(57) Die Erfindung schlägt ein Verfahren zum Lesen von Strichcodes, wobei der Strichcode mittels Licht, vorsugsweise im sichtbaren oder IR-Bereich beleuchtet und reflektiertes Licht detektiert wird und die Übergänge zwischen Bereichen unterschiedlichen Reflektionsvermögens des Strichcodes, d.h. zwischen geschwärzten Strichen und Freiräumen zwischen den Strichen eines solchen Codes, erfaßt und deren Abstände bestimmt werden sowie ein System zum Lesen von Strichcodes, wobei der Strichcode mittels Licht, vorzugsweise im sichtbaren oder IR-Bereich beleuchtet und reflektiertes Licht detektiert und in ein elektrisches Signal umgewandelt wird und ein Differenzierer zum Differenzieren des empfangenen und vorverarbeiteten Signal sowie mindestens ein Komparator vorgesehen ist, vor das eine sichere Auswertung in einfacher Weise dadurch erreicht, daß das empfangene Signal nur einmal differenziert wird, daß der Zeitpunkt des positiven und negativen Spitzenwerts des differenzierten Signals festgestellt und durch dies ein entsprechendes Rechtecksignal erzeugt wird bzw. daß dem Differenzierer jeweils ein Detektor für einen positiven Spitzenwert bzw. einen negativen Spitzenwert des differenzierten Signals nachgeordnet ist und diesen sowie direkt dem Differenzierer jeweils ein Komparator nachgeordnet ist.

## Verfahren und System zum Lesen von Strichcodes

Die Erfindung betrifft ein Verfahren zum Lesen von Strichcodes, wobei der Strichcode mittels Licht, vorzugsweise im sichtbaren oder IR-Bereich beleuchtet und reflektiertes Licht detektiert wird und die Übergänge zwischen Bereichen unterschiedlichen Reflektionsvermögens des Strichcodes, d.h. zwischen geschwärzten Strichen und Freiräumen zwischen den Strichen eines solchen Codes, erfaßt und deren Abstände bestimmt werden sowie ein System zum Lesen von Strichcodes, wobei der Strichcode mittels Licht, vorzugsweise im sichtbaren oder IR-Bereich beleuchtet und reflektiertes Licht detektiert und in ein elektrisches Signal umgewandelt wird und ein Differenzierer zum Differenzieren des empfangenen und vorverarbeiteten Signal sowie mindestens ein Komparator vorgesehen ist.

Aus dem deutschen Patent - (Patentanmeldung P 36 01 083.9) sind ein gattungsgemäßes Verfahren und eine gattungsgemäße Vorrichtung bekannt, die den stand der Technik dahingehend verbessern, daß sie eine hohe Beleuchtungsstärke als auch eine hohe Unempfindlichkeit gegenüber elektromagnetischen Störungen im Bereich der Signalaufnahme sowie ein hohes Signal-Rauschverhältnis bei geringen Kosten ermöglichen. Zu sicheren Auswertung des von dem Fotoelement aufgenommenen Analogsignal wird eine zweifache Differentiation des Signals vorgenommen, um den Zeitpunkt oder Bereich der steilsten Flanke des Analogsignals - als Represäntation des Übergangs einer hellen Fläche zu einem dunklen Strich eines Strichcodes oder umgekehrt - in Rahmen eines Nullwert-Vergleichs festzulegen, wobei weiterhin durch Schwellen sichergestellt ist, daß nur Flanken hinreichender Steilheit festgestellt werden.

Der Erfindung liegt die Aufgabe zugrunde bei ähnlich hoher Detektionssicherheit und Unempfindlichkeit gegen elektromagnetische Störungen und gegen Rauschen ein vereinfachtes Vorgehen zur Auswertung des aufgenommenen Analgsignals vorzuschlagen.

Erfindungsgemäß wird die genannte Aufgabe bei einem Verfahren der eingangs genannten Art, dadurch gelöst, daß das empfangene Signal nur einmal differenziert wird, daß die Zeitpunkte des positiven und negativen Spitzenwerts des differenzierten Signals festgestellt und durch diese ein entsprechendes Rechtecksignal erzeugt wird.

Die Erfindung nimmt also keine zweite Differentiation des Analogsignals vor, um eine Nullwertdetektion des zweifach differenzierten Signals vorzunehmen. Es wird eine zweite Differentiation eingespart und lediglich der Spitzen- oder Maximalwert des nur einmal differenzierten Analogsignals festgestellt, wobei dies dadurch vorgenommen wird, daß mit Veränderung des differenzierten Signals sein jeweiliger Wert, solange das Signal ansteigt, festgehalten wird und bei Reduzierung (des Absolutwerts) des differenzierten Signals gegenüber dem festgehaltenen Wert ein Signal abgegeben wird, wodurch der Umkippunkt und damit der Ort des Spitzenwertes des differenzierten Signals festgestellt wird. Dies wird sowohl für den negativen als auch für den positiven Spitzenwert vorgenommen, woraufhin durch diese ein Rechtecksignalverlauf gebildet wird, welcher dem des abgetasteten oder aufgenommenen Strichcodes entspricht. Die Schaffung des Rechtecksignals geschieht vorzugsweise dadurch, daß durch die positive Spitze des differenzierten Signals ein Flip-Flop gesetzt und dieser durch die negative Spitze des differenzierten Signals zurückgesetzt wird. Um Fehlerquellen, beispielsweise durch Papierrauhigkeiten oder dergleichen auszuschalten ist in weiterer Ausgestaltung vorgesehen, daß zumindestens die positiven Spitzenwerte des differenzierten Signals über einer vorgebbaren Schwelle detektiert werden. Um auch Strichcodes geringer Qualität untersuchen zu können, beispielsweise Strichcodes, bei denen die Schwärzurg der schwarzen Balken durch Matrix-Drucker vorgenommen wurde, sieht eine weiter bevorzugte Ausgestaltung vor, daß ein Rücksetzen durch dichte Schwankungen der einem Strich eines Strichcodes ausgeschlossen wird. Um Störungen aufgrund von Lichtschwankungen oder dergleichen auszuschalten, kann in weiterer Ausgestaltung vorgesehen sein, daß der Strichcode mit hochfrequentem, modulierten Licht beleuchtet wird und aus dem empfangenen Licht der gleiche hochfrequente Anteil ausselektiert wird und daß hochfrequente und niederfrequente Störungen ausgefiltert werden. Eine Weiterbildung sieht darüberhinaus vor, daß das empfangene Signal verstärkt wird.

Ein gattungsgemäßes System zur Lösung der o.g. Aufgabe und insbesondere zur Durchführung des Verfahrens sieht vor, daß dem Differenzierer jeweils ein Detektor für einen positiven Spitzenwert bzw. einen negativen Spitzenwert des differenzierten Signals nachgeordnet ist und diesen sowie direkt dem Differenzierer jeweils ein Komparator nachgeordnet ist, wobei zur Erzeugung des Rechtecksignals insbesondere vorgesehen ist, daß den Komparatoren ein Flip-Flop nachgeschaltet ist. Zur Ausschaltung von Störungen aufgrund von Papierrauhigkeiten oder dergleichen, ist das erfindungsgemäße System derart ausgebildet, daß dem Differenzierer eine Einrichtung nachgeordnet ist, die wenigstens nur eine hinreichend steile ansteigende Flanke (hinreichend positiver Spitzenwert des differenzierten Signals) eines empfangenen Signals zur Weiterverarbeitung durchläßt, wobei insbesondere die Einrichtung eines Spannungsteilers zur Schaffung eines vorgebbaren Schwellwerts aufweist. Um, wie oben erwähnt, auch bei Strichcodes mangelnder Druckqualität eine sichere Erfassung des Endes eines geschwärzten Striches eines Strichcodes zu gewährleisten und erst dann. nicht aber bei Schwarzungsdichteschwankungen im Strich ein Rücksetzen zu veranlassen - solange der Flip-Flop nicht zurückgesetzt ist, ist ein erneutes Setzen aufgrund durch die Schwärzedichtungsschwankungen gegebener ansteigender Signalflanken unschädlich - sieht eine bevorzugte Weiterbildung vor, daß dem Komparator für den negativen Spitzenwert eine Verknüpfungsschaltung zugeordnet ist. Das System sieht in Weiterbildung zur Ausschaltung von Störlicht insbesondere vor, daß der den Strichcode beleuchtenden Lichtquelle ein Hochfrequenzgenerator zur frequenten Modulation des Lichts vorgeschaltet ist und daß die Empfangseinrichtung einen der hochfrequenten Modulation angepaßten selektiven Verstärker aufweist sowie weiterhin, daß der Vorverstärker Filter aufweist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert. Dabei zeigt:

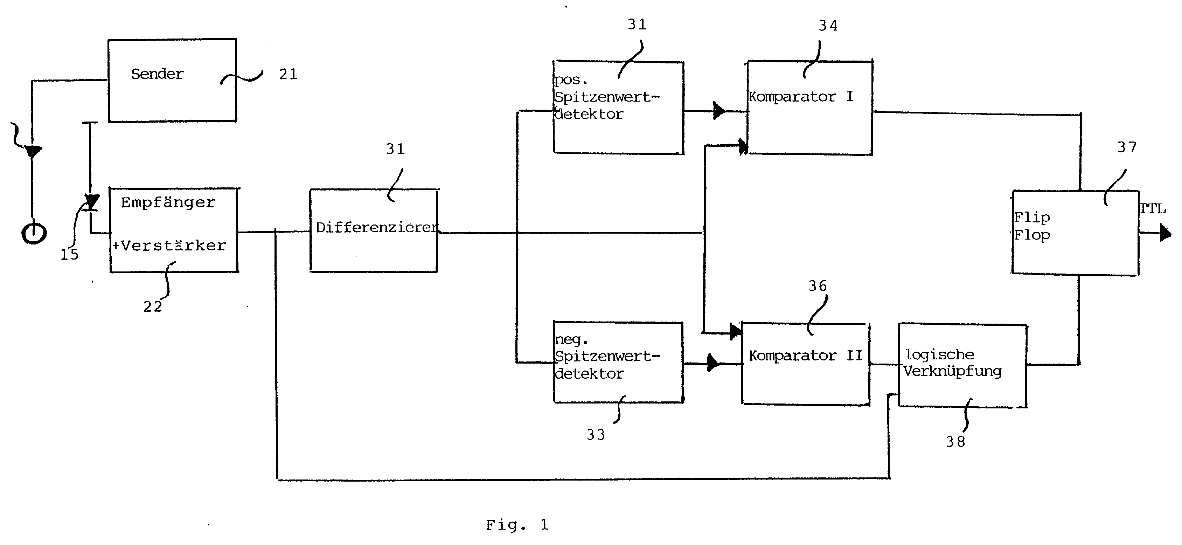

Fig. 1 Ein schematisches Blockschaltbild zur Erläuterung des erfindungsgemäßen Verfahrens;

Fig. 2 eine konkrete Schaltung des erfindungsgemäßen Systems; und

Fig. 3a-d Diagramme zu den auftretenden Signalen.

Die mechanische konstruktive Ausgestaltung des erfindungsgemäßen Systems, insbesondere der Aufbau des Strichcodes-Lesekopfes ist der gleiche wie bei der Patentanmeldung P 36 01 083.9, so daß zur diesbezüglichen Offenbarung in vollem Umfang auf die genannte Anmeldung verwiesen wird.

Der Strichcode-Lesekopf weist einen Lichtsender 21 mit einer Leuchtdiode 6 auf. Das von einem Strichcode reflektierte Licht tritt in einen Lichtwellenleiter, der zu einem Fotoelement 15 führt, welches die opto-elektrische Umwandlung der aufgenommenen Strichcode-Signale vornimmt und mit einer Empfänger- und Verstärkerschaltung 22 verbunden ist.

Obwohl durch das erfindungsgemäße Verfahren schon mit Gleichlicht eine hohe Übertragungssicherheit gegeben ist, kann, um Störungen durch das Tageslicht vollständig und sicher auszuschalten sowie zur weiteren Verbesserung des Signal/Rauschverhältnisses kann die Lichtquelle die Leuchtdiode 6, gegebenenfalls mit einem Wechselspannungssignal einer Frequenz im Bereich von F = 10 bis 30 KHz betrieben. In diesem Falle arbeitet die Empfänger- und Verstärkerschaltung 22 selektiv mit einer Mittenfrequenz, die der Generatorfrequenz der Leuchtdiode entspricht.

Der Empfänger- und Verstärkerschaltung ist ein Differenzierer 31 nachgeschaltet, dem wiederum sowohl ein Spitzenwert-Detektor 32 für den positiven Spitzenwert des vom Differenzierer 31 differenzierten Signals als auch ein Spitzenwert-Detektor für den Spitzenwert-Detektor 33 für den negativen Spitzwenwert des differenzierten Signals folgt. Dem Spitzenwert-Detektoren 32, 33 ist jeweils ein Komparator 34, 36 nachgeschaltet, die die Ausgänge des jeweiligen Spitzenwert-Detektors 32, 33 mit dem direkten Ausgang des Differenzierers 31 vergleichen und ein entsprechendes Signal abgeben. Der Komparator 34 erzeugt dabei ein Setz-Signal für einen Flip-Flop 37. Das Ausgangssignal des Komparators 36 wird mit dem von der Empfänger- und Verstärkerschaltung 22 erzeugten direkten Analogsignal in einer logischen Verknüpfungsschaltung 38 verknüpft, die erst ein Rücksetzsignal für den Flip-Flops 37 erzeugt. Durch Setzen und Rücksetzen des Flip-Flops 37 wird ein TTL-Ausgangssignal erzeugt, daß dem von der Fotodiode 15 aufgenommenen Strichcode entspricht und beispielsweise in einem Rechner weiterverarbeitbar ist.

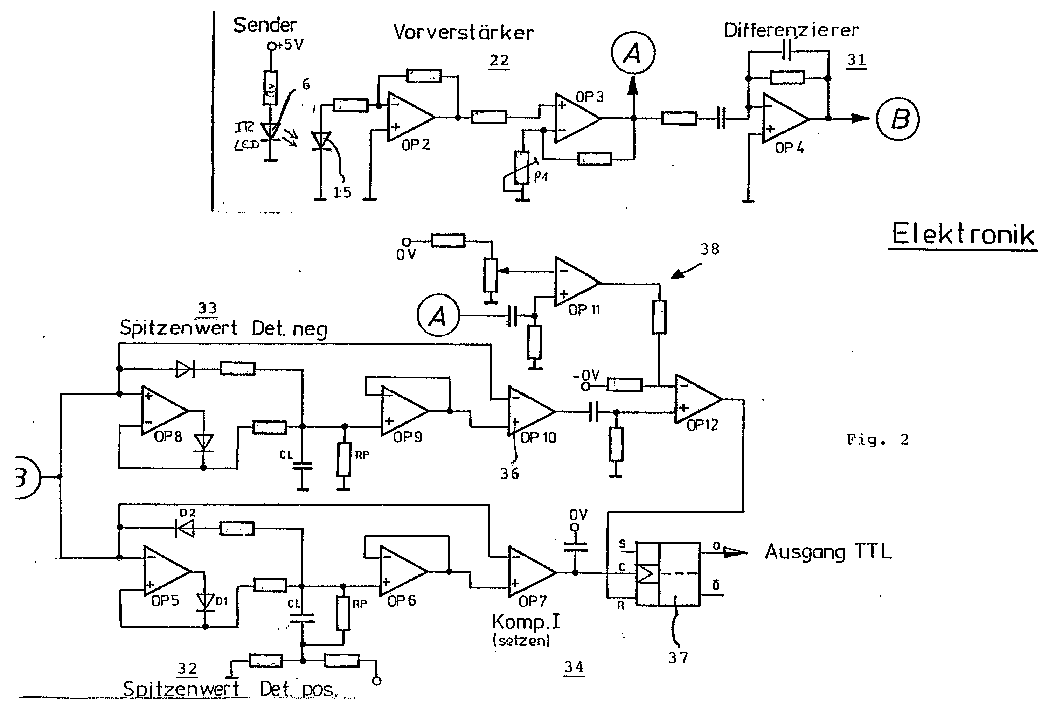

Die Figur 2 zeigt eine konkrete Schaltung. In einem nicht dargestellten Netzteil kann an einem Spannungsteiler der nichtinvertierende Eingang eines Operationsverstärkers liegen. Die Ausgangsspannung des Operationsverstärkers, der als Impedanzwandler arbeitet, beträgt vorzugsweise + 2.5 Volt. Diese Spannung bildet die Bezugsmasse für die elektrische Signalverarbeitung.

Der Lichtsender 6 (IR-LED) liegt über einen Vorwiderstand an der Betriebsspannung von + 5 Volt. Die Größe des Vorwiderstandes richtet sich nach der Länge des Lichtleiterkabels. bzw. nach dem Widerstrand eines mitgeführten Kupferkabels. Der Sendestrom für den Sender beträgt beispielsweise 30 mA.

Als Sensor dient ein Fotoelement 15, welches über einen Widerstand am invertierenden Eingang von eines so invertierenden Operationsverstärkers OP 2 liegt. Die Ausgangsspannung von OP 2 gelangt an den Eingang eines nichtinvertierenden Verstärkers OP 3. Mit dem Potentiometer P1 läßt sich die Verstärkung dieser Stufe einstellen. Der Differenzierer 31 mit dem Operationsverstärker OP 4 differenziert das Ausgangssignal von OP 3. Das Differenziersignal liegt an den Eingängen der beiden Spitzenwertdetektoren für den positiven und negativen Spitzenwert des differenzierten Analogsignals.

Der Operationsverstärker OP 5 hat in seinem Gegenkopplungszweig eine Diode D1, über die der Ladekondensator CL aufgeladen und gespeichert wird. Wird die Spannung am Ausgang von OP 5 wieder kleiner als die am Ladekondensator CL vorhandene Spannung, sperrt die Diode D1 und die Entladung von CL erfolgt nur langsam über den parallelgeschalteten Widerstand RP.

Die Kondensatorspannung liegt über einen Impedanzwandler OP 6 an dem nichtinvertierenden Eingang des Komparators 34 (OP 7), der die Kondensatorspannung mit dem differenzierten Analogsignal selbst vergleicht. Die Spannung am Ladekondensator CL ist aufgrund der vorgegebenen Zeitkonstante (durch CL und RP) während des positiven Anstiegs des differenzierten Signals immer kleiner als das differenzierte Signal selbst, wodurch der Komparator OP 7 zunächst auf "Low" bleibt. Wird nach Erreichen seines Spitzenwerts das differenzierte Analogsignal kleiner als die Spannung am Kondensator CL, so schaltet der Komparator OP 7, 34 von "Low" nach "high". Hierdurch wird das Ausgangsflipflop gesetzt.

Zur Sicherstellung, daß der Ladekondensator CL vor dem nächsten positiven Spitzenwert weit genug entladen ist, dient die Diode D2. Die Diode D2 wird leitend, wenn das Differenziersignal um die Durchlaßspannung der Diode D2 kleiner als die Kondensatorspannung am Ladekondensator CL wird.

Damit Rauhigkeiten des Papiers, und damit verbundene Spannungsänderungen am Ausgang von OP 5 keine Aufladung des Ladekondensators CL des Spitzenwertdetektors verursachen, liegt der Ladekondensator CL über einen Spannungsteiler auf geringem positiven Potential gegenüber der Bezugsmasse für die Operationsverstärker. Das differenzierte Analogsignal muß daher größer als dieser Schwellwert sein, um den Komparator OP 7 von "high" nach "Low" zu schalten.

Der negative Spitzenwertdetektor 33 arbeitet in gleicher Weise wie der positive Spitzenwertdetektor 32. Auf den Spannungsteiler für den Ansprechschwellwert kann verzichtet werden, da ein Rücksetzimpuls für das Ausgangsflipflop 37 nur dann eine Änderung seines Zustandes bewirkt, wenn zuvor das Flip-Flop 37 gesetzt wurde. Das Komparatorsignal des Komparators 36 (OP 10) wird mit einem RC-Glied differenziert und gelangt an den Eingang eines Komparators OP 12. Dieser erzeugt die Rücksetzimpulse für das Ausgangsflipflop. Da nicht nur der Übergang von schwarz auf weiß des Strichcodes ein Rücksetzimpuls am Eingang von OP 12 erzeugen könnten, sondern auch die Ränder der einzelnen Matrixdruckerpunkte, ist eine Verknüpfungsschaltung 38 mit einem Operator OP 12 auch als logischen Verknüpfer vorgesehen. Ein Komparator 11 (OP 11) erzeugt aus dem Analogsignal von OP 3 des Verstärkers und einem einstellbaren Schwellwert ein Rechtecksignal, welches über einen Spannungsteiler den invertierenden Eingang von OP 12 steuert. Liegt kein Analogsignal über den Hochpass am Plus-Eingang von OP 11 an, ist durch das negativere Potential am Minus-Eingang von OP 11 dessen Ausgang auf high. Über einen Spannungsteiler liegt der Minus-Eingang von OP 12 auf negativeren Potential als der Plus-Eingang von OP 12, der Massepotential aufweist. Der Ausgang von OP 12 liegt daher auf high.

Liegt ein Analogsignal über den Hochpass am Plus-Eingang von OP 11 an, schalten die negativen Anteile des Analogsignals den Ausgang von OP 11 nach Low. Die Spannung am Minus-Eingang von OP 12 wird somit noch negativer als die Bezugsmasse am Plus-Eingang von OP 12. Negative Spannungsspitzen am Plus-Eingang von OP 12 können den Ausgangszustand des Komparators nicht ändern. Wird das Analogsignal am Plus-Eingang von OP 11 positiver als das Potential am Minus-Eingang von OP 11 so wird der Ausgang von OP 11 high und der Minus-Eingang von OP 12 wird positiver. Aber auch jetzt ist der Minus-Eingang von OP 12 negativer als der Plus-Eingang von OP 12. Der Ausgang des Komparators bleibt auf high. Ein negativer Impuls am Plus-Eingang von OP 12 kann jetzt den Ausgang des Komparators für die Dauer, für die der Impuls negativer ist als der Minus-Eingang, auf Low schalten, und somit einen gültigen Rücksetzimpuls für das Ausgangsflipflop 37 erzeugen.

Der Ausgang von OP 12 liefert dann die Rücksetzimpulse für das Ausgangsflipflop 37. Am Q-Ausgang des Flip-Flops steht ein TTL-Signal, das dem Barcodemuster entspricht.

Das vom Fotoempfänger abgegebene Signal wird also im Vorverstärker 22 verstärkt und dann im Differenzierer 31 differenziert. Das differenzierte Signal wird den Spitzenwert-Detektoren 32, 33 zugeführt. Ein positiver Spitzenwert erzeugt ein Setzsignal für den Flip-Flop 37, in dem eine ansteigende Flanke des differenzierten Signals der jeweilige Wert gespeichert wird und im Komparator bei Unterschreiten des Momentanwertes des differenzierten Signals von seinem gespeicherten Wert der Setzimpuls abgegeben wird. Es wird dabei nur ein differenziertes Signal oberhalb einer vorgegebenen Schwelle, d.h. eine Flanke hinreichender Steilheit berücksichtigt.

Das Signal von Komparator 36 und Spitzenwertdetektor 33 für den negativen Spitzenwert wird durch die Verknüpfungsschaltung 38 mit einem aus dem direkten Analogsignal und einem vorgegebenen Schwellwert gebildeten Rechtecksignal verknüpft, um den Rücksetzimpuls für den Flip-Flop 37 zu bilden. Hierdurch wird vermieden, daß Schwärzungs-Schwankungen innerhalb eines Barcode-Striches Rücksetzimpulse bewirken und sichergestellt, daß solche nur tatsächlich am Ende eines Barcode-Striches erfolgen.

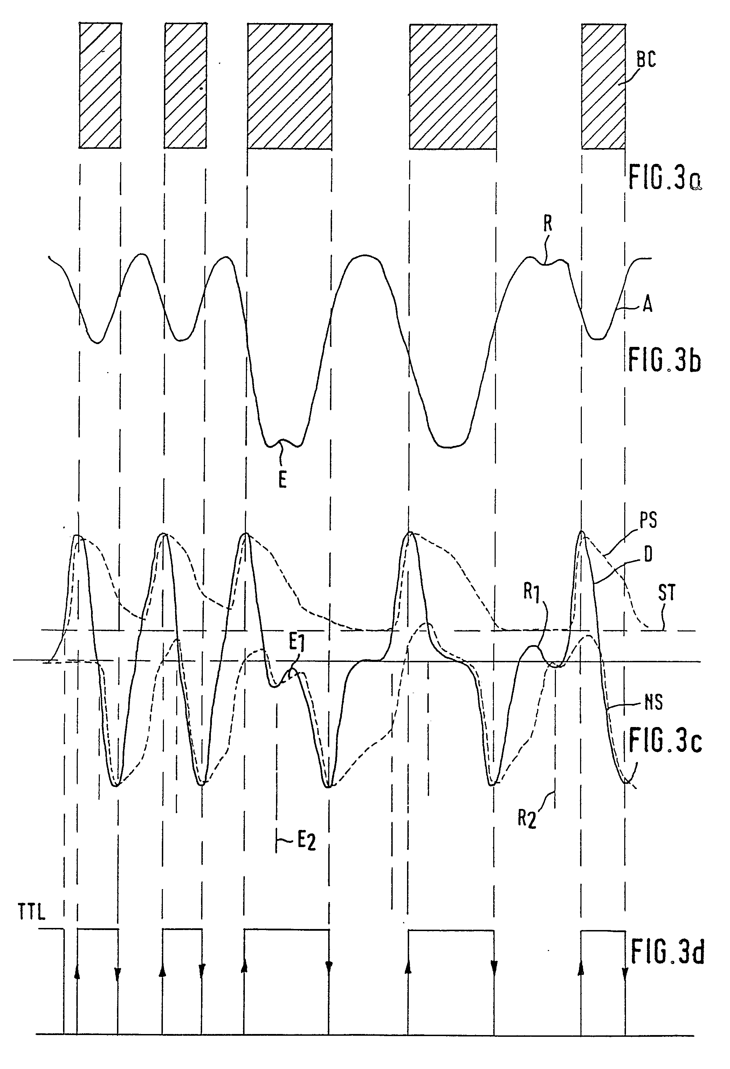

In der Figur 3 sind schematisch die Balken des Barcodes dargestellt, wobei die Rechtecke die geschwärzten Striche des Barcodes darstellen und dazwischen die hellen, unbedruckten Stellen des Trägers sind. In der Figur 3b ist das von der Fotodiode aufgenommene und verstärkte Analogsignal A dargestellt, wobei bei E ein Einbruch des Analogsignals durch Auflösung von Matrix-Druckerpixeln durch den Lesestift angedeutet ist, während bei R eine Änderung des Analogsignals durch die Papierrauhigkeit angedeutet ist.

Die Figur 3c zeigt zunächst das Analogsignal nach Differentiation als differenziertes Signal D. Weiterhin sind in die Figur 3c die durch die Ladekondensatoren gespeicherten positiven und negativen Spannungen PS, NS sowie die Schwellspannung ST dargestellt.

Die Figur 3d zeigt schließlich das erfindungsgemäß erzielte TTL-Signal, das dem Barcode-Signal BC der Figur 3a entspricht.

Es ist ersichtlich, daß die Signale an den Ladekondensatoren jeweils zunächst dem differenzierten Signal bis zu deren Spitzenwert nahezu folgen und, wenn das differenzierte Signal betragsmäßig die Kondensatorspannung unterschreitet vom jeweiligen Komparator der jeweilige Impuls zum Setzen oder Rücksetzen ausgelöst wird, der auch, soweit ein echter Übergang im Re flektionsvermögen des Barcodes BC vorliegt ein Umschalten des Flip-Flops bedingt.

Im Bereich E des Einbruchs des Analogsignals durch Auflösung von Matrix-Druckerpixeln durch den Lesestift liegt ein Wendepunkt des differenziertenSignals mit zwei relativen Extrema des differenzierten Signals bei E1. Der Komparator 36, OP 10 gibt dabei zwar einen Rücksetzimpuls bei E2 ab, der aber von Operator OP 12 aufgrund des grundsätzlich negativen Analogsignalwerts bei E kein Zurücksetzen des Ausgangflipflops und damit Heruntersetzen des TTL-Werts auf Null bedingt.

Im Bereich der Papierrauhigkeiten R des Analogsignals A (Figur 3) ergibt sich ebenfalls ein Bereich R1 von relativen Extrema des differenzierten Signals D. Papierrauhigkeiten bedingen aber grundsätzlich nur sanfte Signalsänderungen, so daß das relative Maximum unterhalb des vorzusetzenden Schwellwerts ST bleibt - während Einbrüche aufgrund der Auflösung von Matrix-Druckerpixeln gegebenfalls "steile" Extrema bedingen können, so daß dort die Setzung eines einflachen Schwellwerts für das differenzierte Signal nicht möglich, wenn dies bei Papierrauhigkeiten ausreicht. Da der Ausgangs-TTL-Wert ohnehin niedrig bzw. Null ist, bewirkt auch das Kreuzen von differenzierten Signal und Spannung am Ladekondensator im Zweig des negativen Spitzenwerts, wie es bei R2 angedeutet ist keine Verfälschung des Ausgangs-TTL-Signals.

## Ansprüche

1. Verfahren zum Lesen von Strichcodes, wobei der Strichcode mittels Licht, vorzugsweise im sichtbaren oder IR-Bereich beleuchtet und reflektiertes Licht detektiert wird und die Übergänge zwischen Bereichen unterschiedlichen Reflektionsvermögens des Strichcodes, d.h. zwischen geschwärzten Strichen und Freiräumen zwischen den Strichen eines solchen Codes, erfaßt und deren Abstände bestimmt werden, dadurch gekennzeichnet, daß das empfangene Signal nur einmal differenziert wird, daß die Zeitpunkte des positiven und negativen Spitzenwerts des differenzierten Signals festgestellt und durch diese ein entsprechendes Rechtecksignal erzeugt wird.

2. Verfahren nach Anspruch 1, dadurch gekennzeichnet, daß zumindestens die positiven Spitzenwerte des differenzierten Signals über einer vorgebbaren Schwelle detektiert werden.

3. Verfahren nach Anspruch 1 oder 2, dadurch gekennzeichnet, daß ein Rücksetzen durch Dichteschwankungen der Schwärzung in einem Strich eines Strichcodes ausgeschlossen wird.

4. Verfahren nach einem der vorangehenden Ansprüche, dadurch gekennzeichnet, daß durch die positive Spitze des differenzierten Signals ein Flip-Flop gesetzt und dieser durch die negative Spitze des differenzierten Signals zurückgesetzt wird.

5. Verfahren nach einem der vorangehenden Ansprüche, dadurch gekennzeichnet, daß Strichcode mit hochfrequentem, modulierten Licht beleuchtet wird und aus dem empfangenen Licht der gleiche hochfrequente Anteil ausselektiert wird.

6. Verfahren nach einem der vorangehenden Ansprüche, dadurch gekennzeichnet, daß hochfrequente und niederfrequente Störungen ausgefiltert werden.

7. Verfahren nach einem der vorangehenden Ansprüche, dadurch gekennzeichnet, daß das empfangene Signal verstärkt wird.

8. System zum Lesen von Strichcodes, wobei der Strichcode mittels Licht, vorzugsweise im sichtbaren oder IR-Bereich beleuchtet und reflektiertes Licht detektiert und in ein elektrisches Signal umgewandelt wird und ein Differenzierer (31) zum Differenzieren des empfangenen und vorverarbeiteten Signal sowie mindestens ein Komparator vorgesehen ist, dadurch gekennzeichnet, daß dem Differenzierer (31) jeweils ein Detektor (32, 33) für einen positiven Spitzenwert bzw. einen negativen Spitzenwert des differenzierten Signals nachgeordnet ist und diesen sowie direkt dem Differenzierer (31) jeweils ein Komparator (34, 36) nachgeordnet ist.

9. System nach Anspruch 8, dadurch gekennzeichnet, daß den Komparatoren (34, 36) ein Flip-Flop (37) nachgeschaltet ist.

10. System nach Anspruch 8 oder 9, dadurch gekennzeichnet, daß dem Differenzierer (31) eine Einrichtung nachgeordnet ist, die wenigstens nur eine hinreichend steile ansteigende Flanke (hinreichend positiver Spitzenwert des differenzierten Signals) eines empfangenen Signals zur Weiterverarbeitung durchläßt.

11. System nach Anspruch 10, dadurch gekennzeichnet, daß die Einrichtung einen Spannungsteiler zur Schaffung eines vorgebbaren Schwellwerts ist.

12. System nach einem der Ansprüche 8 bis 11, dadurch gekennzeichnet, daß dem Komparator (36) für den negativen Spitzenwert eine Verknüpfungsschaltung (38) zugeordnet ist.

13. System nach einem der Ansprüche 8 bis 12, dadurch gekennzeichnet, daß der den Strichcode beleuchtenden Lichtquelle (6) ein Hochfrequenzgenerator zur frequenten Modulation des Lichts vorgeschaltet ist.

14. System nach Anspruch 13, dadurch gekennzeichnet, daß die Empfangseinrichtung einen der hochfrequenten Modulation angepaßten selektiven Verstärker aufweist.

15. System nach Anspruch 14, dadurch gekennzeichnet, daß der Vorverstärker Filter aufweist.

Fig. 1

**Fig. 2**

EP 0 299 472 A2

EP 0 299 472 A2

FIG.3a

FIG.3b

FIG.3c

FIG.3d